(19) **Europäisches Patentamt**

**European Patent Office**

**Office européen des brevets**

(11) **EP 0 846 717 B1**

(12) **EUROPÄISCHE PATENTSCHRIFT**

(45) Veröffentlichungstag und Bekanntmachung des Hinweises auf die Patenterteilung:
**03.01.2001 Patentblatt 2001/01**

(51) Int Cl.[7]: **C08G 77/26**, C08G 77/24, C09D 183/08

(21) Anmeldenummer: **97117645.8**

(22) Anmeldetag: **11.10.1997**

(54) **Fluoralkyl-funktionelle Organopolysiloxan-haltige Zusammensetzungen auf Wasserbasis, Verfahren zu deren Herstellung sowie deren Verwendung**

Aqueous functional fluoroalkylgroup containing organopolysiloxane compositions, process for their preparation and their use

Compositions aqueuses d'organopolysiloxanes ayant des groupes fonctionnels fluoralkyle, procédé pour leur préparation et leur emploi

(84) Benannte Vertragsstaaten:
**AT BE CH DE DK ES FR GB IT LI NL SE**

(30) Priorität: **03.12.1996 DE 19649953**

(43) Veröffentlichungstag der Anmeldung:
**10.06.1998 Patentblatt 1998/24**

(73) Patentinhaber: **Degussa-Hüls Aktiengesellschaft 60287 Frankfurt am Main (DE)**

(72) Erfinder:
• **Standke, Burkhard, Dr.**
**79540 Lörrach (DE)**
• **Edelmann, Roland**
**79664 Wehr (DE)**
• **Frings, Albert-Johannes, Dr.**
**79618 Rheinfelden (DE)**
• **Horn, Michael, Dr.**
**79618 Rheinfelden (DE)**

(56) Entgegenhaltungen:
EP-A- 0 692 567       EP-A- 0 716 128
WO-A-95/23830         WO-A-97/23432
US-A- 4 417 066

• PATENT ABSTRACTS OF JAPAN vol. 098, no. 001, 30.Januar 1998 & JP 09 249748 A (SHIN ETSU CHEM CO LTD), 22.September 1997,

**Beschreibung**

Die Erfindung betrifft Organopolysiloxan-haltige Zusammensetzungen auf Wasserbasis, die im wesentlichen frei von organischen Lösemitteln sind, einen Flammpunkt von mehr als 70 °C besitzen und bei Verdünnen mit Wasser im wesentlichen keine Alkohole durch Hydrolyse freisetzen, ein Verfahren zu deren Herstellung sowie deren Verwendung. Unter wasserbasierenden Zusammensetzungen sind hier solche zu verstehen, die keine aliphatischen oder aromatischen Kohlenwasserstoffe, Halogenkohlenwasserstoffe, Glykole, Glykolether, Ether, Ketone, Ester, Amide und andere Stickstoff-Verbindungen sowie Schwefel- und Nitroverbindungen auf rein organischer Basis sowie Protonen-(bzw. Wasserstoff-)freie Lösemittel in Anteilen von mehr als 100 Gew.-ppm enthalten. Hingegen werden Protonen-haltige Agenzien, wie Wasser, anorganische oder organische Säuren, und Alkohole, wie Methanol, Ethanol, n- und i-Propanol sowie höhere Alkohole in dieser Reihe, nachfolgend nicht als organische Lösemittel angesehen.

Organosilane der allgemeinen Formel $R^0$ - Si $(OR^1)_3$, mit $R^0$ als organischem Rest und $R^1$ als Methyl- bzw. Ethyl-Rest, finden vielfältige Anwendungen, z. B. als Haftvermittler, Trennmittel, Rheologieverbesserer, Vernetzer, Hydrophobierungsmittel.

Aus ökologischen, arbeitssicherheitstechnischen und ökonomischen Gründen geht man immer mehr dazu über, ihre Applikation in wäßriger Form vorzunehmen. Hierbei treten in der Regel folgende Probleme auf:

-   Durch Hydrolyse werden Alkohole freigesetzt:

$$R^0\text{-Si}(OR^1)_3 + 3\,H_2O \rightarrow R^0\text{-Si}(OH)_3 + 3\,R^1OH$$

Freie Alkohole erniedrigen den Flammpunkt der Anwendungslösung, so daß explosionsgeschützte Maschinen und Spezialgeräte für die notwendigen Verarbeitungsschritte eingesetzt werden müssen. Aus toxikologischen Gründen müssen die mit dem Umgang betrauten Mitarbeiter zusätzlich geschult und geschützt werden. Ferner kann die Entsorgung der gebrauchten Anwendungslösung aufgrund der Hydrolysealkohole Schwierigkeiten bereiten. Spezielle Abwasserkläranlagen, aber auch Anlagen zur Abgas- bzw. Abluftnachbehandlung werden benötigt.

-   Das in Wasser zu applizierende Organosilan ist nicht wasserlöslich:

$$R^0\text{-Si}(OR^1)_3 + 1,5\,H_2O \rightarrow R^0\text{-SiO}_{1,5} + 3\,R^1OH$$

Das danach gebildete Hydrolysat R-SiO$_{1,5}$ fällt als polymeres Silikonharz aus dem Reaktionsgemisch aus, so daß es für die gewünschte Anwendung nicht mehr zur Verfügung steht. Organosilane mit sehr stark hydrophobem Charakter, wie z. B. Alkylalkoxysilane, insbesondere mit einem langen, verzweigten Kohlenstoffgerüst oder gegebenenfalls mit fluorierten Alkylgruppen, wie sie beispielsweise in der noch nicht veröffentlichten deutschen Patentanmeldung Nr. 196 44 561.2 beschrieben werden, hydrolysieren bzw. kondensieren zwar sehr langsam, sind jedoch in Wasser nicht löslich und liegen nach Hydrolyse vorwiegend als polymeres, nicht wasserlösliches Silikonharz vor.

In den letzten Jahren wurden für Fluoralkylchlorsilane und Fluoralkylalkoxysilane eine große Zahl neuer Anwendungsgebiete gefunden. So werden diese Verbindungen beispielsweise als Additive in Tensiden, als Schmiermittel, zur Oberflächenvergütung von Linsen und optischen Fasern, als Primer für Fluorharze, als Bestandteile kosmetischer Zubereitungen, als Modifikator in Fluorkautschuken und Siliconkautschuken und zur Herstellung öl-, schmutz- sowie wasserabweisender Oberflächen eingesetzt. Derartige Organosilane können in der Regel nicht oder nur mit Nachteilen in wäßriger Applikation angewandt werden, obwohl hierfür ein zunehmender Bedarf besteht. So werden beispielsweise in der Textil- und Lederindustrie Oberflächenbehandlungen aus wäßriger Lösung heraus angestrebt. Ebenso ist bei der Imprägnierung mineralischer Oberflächen (z. B. Gebäudefassaden aus Putz, Beton, Kalksandstein, Ziegel oder anderen mineralischen Baustoffen) im Bautenschutzbereich ein deutlicher Trend hin zur Verwendung wasserbasierender Systeme zu erkennen.

Öl- und wasserabweisende Beschichtungen auf Oberflächen, meist Glasoberflächen, werden im wesentlichen mit Hilfe von Fluoralkylalkoxysilanen sowie Fluoralkylchlorsilanen erzeugt (EP-OS 0 629 673, EP-OS 0 658 525). Solche Beschichtungen können auch zur schmutzabweisenden Ausrüstung von Flachglas verwendet werden. Die beschriebenen Verfahren basieren auf Sol-Gel-Prozessen, wobei zusammen mit dem eingesetzten Fluoralkylsilan feinste anorganische Partikel erzeugt und eingesetzt werden. Die Applikation ist technisch aufwendig und verwendet meist komplexe organische Lösemittelgemische und Zusatzstoffe.

Aus der US 5 424 130 sind alkoholische Lösungen auf der Grundlage von Fluoralkylalkoxysilanen zur Erzeugung von öl- und wasserabweisenden Beschichtungen bekannt, wobei solche Lösungen hohe Alkohol-Gehalte mit beispielsweise 52 Gew.-% Ethanol aufweisen.

Bei den beschriebenen Verfahren wirken sich einerseits die komplizierten Applikationsverfahren und andererseits die Verwendung organischer Lösemittel negativ aus. Als Lösemittel werden bei einigen Verfahren sogar ökologisch sehr problematische Stoffe, wie chlorierte Kohlenwasserstoffe oder Fluorkohlenwasserstoffe, in erheblicher Konzentration eingesetzt (EP-OS 0 491 251, EP-OS 0 493 747). Zudem sind Fluoralkylgruppen-haltige Silane sehr teure Substanzen. Es besteht somit durchaus ein wirtschaftliches Interesse, Fluoralkylgruppen-haltige Silane einzusparen, beispielsweise Fluoralkylgruppen-tragende Silane durch Alkylsilane - quasi als Verdünnungsmedium - einzusetzen, was bei gleicher Einsatzmenge des Fluoralkylsilans eine Erhöhung der Hydrophobierwirkung zur Folge haben könnte.

Um die bekannten, oben beschriebenen Nachteile zu mildern, wurden in der zurückliegenden Zeit verschiedenste Verfahren angeregt:

Bei der Emulsionsmethode wird das an sich nicht wasserverträgliche Organosilan an flüssiges, nicht wasserlösliches Silikonharz unter Zuhilfenahme von Emulgatoren in Wasser emulgiert (EP-OS 0 442 098, EP-PS 0 358 652, US 4 620 878). Nachteilig ist hier, daß die Produkte merkliche Anteile Tenside als Emulgatoren enthalten sowie erhebliche Mengen Alkohol freisetzen können.

Die destillative Entfernung von Hydrolysealkoholen während der Synthese von Organosilan-Zubereitungen aus wasserlöslichen Organosilanen, wie z. B. aus 3-Aminopropyltriethoxysilan, ist bekannt. Wasserbasierende Aminosilansysteme mit geringem Alkoholanteil und ansonsten lösemittelfrei, sind auf diese Weise zugänglich und beispielsweise in Form von DYNASYLAN® 1151 marktgängig.

Einige Organosilane, wie z. B. Aminoalkylalkoxysilane, sind zwar in wäßriger Lösung stabil, besitzen jedoch nur eingeschränkte Einsatzfähigkeit in den vielfältigen Einsatzmöglichkeiten organofunktioneller Silane. Das Hinzufügen weiterer organischer Funktionalitäten an sich in wäßriger Lösung nicht stabiler Organosilane, insbesondere in höherer Konzentration, kann eine Zubereitung mit neuen besonderen Eigenschaften oder mit einer Kombination bisher unbekannter Eigenschaften hervorbringen.

Eine Zubereitung von Silan-Kombinationen in Wasser geht aus der US-Patentschrift 5 073 195 hervor. Die Silan-Zubereitungen werden aus einem nicht wasserlöslichen Alkyltrialkoxysilan und einem wasserlöslichen Silan, wie z. B. einem Aminoalkylalkoxysilan, in einem molaren Verhältnis zwischen 1 : 2 bis 3 : 1 hergestellt. Wie den Beispielen der US-Patentschrift zu entnehmen ist, erfolgt die Herstellung der Zubereitungen durch eine unterstöchiometrische Hydrolyse des Silangemisches und Strippen der Reaktionsmischung bei 60 °C unter vermindertem Druck, für nachfolgende Anwendungen werden so erhaltene Silan-Zubereitungen auch mit Wasser verdünnt. Durch das Verdünnen mit Wasser erfolgt dann aber die Abspaltung der bei der unvollständigen Hydrolyse verbleibenden Alkoxygruppen in Form der entsprechenden Alkohole. Die hier offenbarten Silan-Cohydrolysate enthalten somit freie Alkohole in deutlichen Mengen und können darüber hinaus weitere Mengen Alkohol durch Hydrolyse freisetzen und enthalten keine Fluoralkylgruppen tragende Si-Verbindungen, wodurch die Anwendungseigenschaften der Produkte gegenüber den erfindungsgemäßen Produkten nachteilig beeinflußt werden.

In der europäischen Patentanmeldung Nr. 0 675 128 wird die Modifizierung wasserbasierender Organosilan-Zubereitungen mit geringen Mengen an sich nicht wasserlöslicher Organosilane, wie beispielsweise Methyltrimethoxysilan oder Vinyltrimethoxysilan, beschrieben. Nach diesem Verfahren ist ein molares Verhältnis der nicht wasserlöslichen Komponente zu der wasserlöslichen Komponente von 1 : 2,5 erreichbar. Bei einem höheren Anteil nicht wasserlöslicher Silane bilden sich hochviskose Produkte, die mit der Zeit gelieren. Die Anwendungseigenschaften entsprechen im wesentlichen denen der zuvor genannten, wasserbasierenden Organosilan-Zubereitungen. Nicht zugänglich nach diesem Verfahren sind über Monate stabile wäßrige Lösungen mit höheren Anteilen nicht wasserlöslicher Organosilane, beispielsweise mit Methacryloxypropyltrimethoxysilan. Auch die Herstellung rein wäßriger Lösungen unter Verwendung stark hydrophob wirkender Silane, wie z. B. Isobutyl- oder Oktyltrimethoxysilan, ist auf diese Weise wohl nicht möglich.

EP-OS 0 716 127 und EP-OS 0 716 128 offenbaren die Herstellung von wasserlöslichen, Lösemittel-freien und im wesentlichen von Hydrolysealkoholen freien Organosilan-Zubereitungen mit hohen Anteilen an nicht wasserlöslichen Silanen, u. a. Alkylsilane, Vinylsilane, Ureidosilane. Die Wasserlöslichkeit der Zubereitungen wird durch gezielte Cohydrolyse von Aminosilanen mit nicht wasserlöslichen Silanen, anschließender Neutralisierung der Aminofunktion mit Säuren und Destillation der Hydrolysealkohole erreicht.

Der Erfindung liegt somit die Aufgabe zugrunde, im wesentlichen lösemittelfreie Fluoralkylgruppen enthaltende Organosilan-haltige Zubereitungen mit weiteren Funktionalitäten auf Wasserbasis bereitzustellen.

Die gestellte Aufgabe wird erfindungsgemäß entsprechend den Angaben der Patentansprüche gelöst.

Es wurde überraschenderweise gefunden, daß im wesentlichen lösemittelfreie Organopolysiloxan-haltige Zusammensetzungen auf Wasserbasis, die einen Flammpunkt von mehr als 70 °C besitzt und bei Verdünnen mit Wasser im wesentlichen keine Alkohole durch Hydrolyse freisetzen, welche ferner Si-gebundene Fluoralkyl-Funktionen enthalten, dann in einfacher und wirtschaftlicher Weise als homogene, klare und über mehrere Wochen stabile Lösungen zugänglich sind, wenn man a Mole wasserlöslicher Aminosilane der allgemeinen Formel II und b Mole Fluoralkyl-funktioneller Organosilane der allgemeinen Formel III und gegebenenfalls c sowie d Mole nicht wasserlöslicher Organosilane der allgemeinen Formeln IV sowie V in einem molaren Verhältnis M = [a/(b+c+d)] ≥ 0,1 mit a>0, b>0, c≥o, d≥0 mischt, das Organosilangemisch mit Wasser oder einem Wasser/Säure-Gemisch und/oder einem Wasser-/Säure/ Alkohol-Gemisch vermischt, wobei man die Säuremenge geeigneterweise so wählt, daß die Reaktionsmischung einen pH-Wert im Bereich von 1 bis 8 aufweist, und den bereits vorhandenen und/oder bei der Umsetzung entstandenen Alkohol entfernt. Die dabei entstehenden Organosilanpolykondensate besitzen nach chemischer Plausibilität im allgemeinen die in Formel I (siehe unten) wiedergegebene Näherungsstruktur. Eine vollständige Strukturaufklärung mit gängigen Methoden der Polymeranalytik gelingt aufgrund der sehr hohen Reaktivität der organofunktionellen Siloxane nicht, so ist auch ein geringer Anteil an nicht hydrolysierten, Si-gebundenen Alkoxy-Gruppen in Verbindungen gemäß Formel I nicht auszuschließen. Geeigneterweise beträgt der Gehalt an Fluoralkylgruppen-enthaltenden Organopolysiloxanen als Wirkstoff in der erfindungsgemäßen Zusammensetzung 0,005 bis 60 Gew.-%, insbesondere 0,01 bis 10 Gew.-%.

Gegenstand der vorliegenden Erfindung ist somit eine Organopolysiloxan-haltige Zusammensetzung auf Wasserbasis, die frei ist von Tensiden, von Methoxyfunktionellen Aminosilsesquioxanen sowie von Silikonharz-haltigen Mikroemulsionen, im wesentlichen frei von organischen Lösemitteln ist, einen Flammpunkt von mehr als 70 °C besitzt und bei Verdünnen mit Wasser im wesentlichen keine Alkohole durch Hydrolyse freisetzt, wobei die Zusammensetzung Organopolysiloxane der allgemeinen Formel I

$$HO[Si(A)(CH_3)_z(OH)_{1-z}O]_a[Si(B)(R^2)_y(OH)_{1-y}O]_b[Si(C)(CH_3)O]_c[Si(D)(OH)O]_dH \cdot (HX)_e \qquad (I),$$

worin A einen Aminoalkyl-Rest, abgeleitet aus der allgemeinen Formel II

$$H_2N(CH_2)_f(NH)_g(CH_2)_hSi(OR)_{3-z}(CH_3)_z \qquad (II),$$

wobei 0≤f≤6, g=0 falls f=0 und g=1 falls f>0, 0≤h≤6 und 0≤z≤1 sind,

und B einen Fluororgano-Rest, abgeleitet aus Tridecafluor-1,1,2,2-tetrahydrooctyl-1-trimethoxysilan oder Tridecafluor-1,1,2,2-tetrahydrooctyl-1-triethoxysilan oder aus der allgemeinen Formel III

$$R^1-Y(CH_2)_2Si(R^2)_y(OR)_{3-y} \qquad (III),$$

wobei $R^1$ eine mono-, oligo- oder perfluorierte Alkyl-Gruppe mit 1 bis 9 C-Atomen, d. h. lineare, verzweigte oder cyclische Alkyl-Gruppen, oder eine mono-, oligo- oder perfluorierte Aryl-Gruppe oder eine $R^1CH_2CH_2(CO)$-Gruppe mit $R^f = C_nF_{2n+1}$ und n = 2 bis 18, Y eine $CH_2$-, O- oder S-Gruppe, $R^2$ eine lineare, verzweigte oder cyclische Alkyl-Gruppe mit 1 bis 8 C-Atomen oder eine Aryl-Gruppe bedeuten und 0≤y≤1 ist,

und C einen Alkyl-Rest, abgeleitet aus der allgemeinen Formel IV

$$R^3-Si(CH_3)(OR)_2 \qquad (IV),$$

und D ebenfalls einen Alkyl-Rest, jedoch abgeleitet aus der allgemeinen Formel V

$$R^3-Si(OR)_3 \qquad (V),$$

wobei $R^3$ in den vorangegangenen Formeln eine lineare, verzweigte oder cyclische Alkyl-Gruppe mit 1 bis 8 C-Atomen bedeutet, $R^3$ in den vorangegangenen Formeln jeweils gleich oder verschieden ist, R in den vorangegangenen Formeln eine lineare, verzweigte oder cyclische Alkyl-Gruppe mit 1 bis 8 C-Atomen oder eine Aryl-Gruppe bedeutet und R in den vorangegangenen Formeln jeweils gleich oder verschieden ist, vorzugsweise stellt R eine Methyl-, Ethyl-, Propyl- oder Isopropyl-Gruppe dar,

und HX eine Säure darstellen, wobei X ein anorganischer oder organischer Säure-Rest ist, wie z. B. Chlorid, Nitrat, Formiat oder Acetat,

und $0 \leq y \leq 1$, $0 \leq z \leq 1$, a>0, b>0, c≥o, d≥0, e≥0 und (a+b+c+d)≥2, vorzugsweise (a+b+c+d)≥4 sind,

enthält und der Gehalt an Organopolysiloxanen als Wirkstoff in der Zusammensetzung mindestens 0,005 Gew.-% und der Alkoholgehalt weniger als 3 Gew.-% beträgt.

Geeigneterweise enthält die erfindungsgemäße Organopolysiloxan-haltige Zusammensetzung eine einwertige anorganische und/oder organische Säure und/oder deren Folgeprodukte, wobei die Zusammensetzung vorzugsweise einen pH-Wert zwischen 1 und 8, besonders vorzugsweise einen pH-Wert zwischen 1 und 6, ganz besonders vorzugsweise einen pH-Wert zwischen 1 und 5, besitzt. Unter dem Begriff Folgeprodukte sollen an dieser Stelle Verbindungen wie Alkalihalogenide, insbesondere Natrium- oder Kaliumchlorid, Alkaliacetate, Alkaliformiate, Alkalinitrate oder Verbindungen der Aminogruppierungen in den Organopolysiloxanen mit anorganischen oder organischen Säure-Resten, wie sie der allgemeinen Formel I zu entnehmen sind, verstanden werden.

Gegenstand der vorliegenden Erfindung ist darüber hinaus eine Organopolysiloxan-haltige Zusammensetzung, die erhältlich ist durch

-    Mischen wasserlöslicher Organosilane der allgemeinen Formel II

$$H_2N(CH_2)_f(NH)_g(CH_2)_h\text{-}Si(CH_3)_z(OR)_{3-z} \tag{II},$$

worin $0 \leq f \leq 6$, g=0 falls f=0 und g=1 falls f>1, $0 \leq h \leq 6$, $0 \leq z \leq 1$ und
R eine lineare, verzweigte oder cyclische Alkyl-Gruppe mit 1 bis 8 C-Atomen oder Aryl-Gruppe sind,
mit   Tridecafluor-1,1,2,2-tetrahydrooctyl-1-trimethoxysilan,   Tridecafluor-1,1,2,2-tetrahydrooctyl-1-triethoxysilan oder Fluororgano-funktionellen Organosilanen der allgemeinen Formel III

$$R^1\text{-}Y\text{-}(CH_2)_2Si(R^2)_y(OR)_{3-y} \tag{III},$$

worin $R^1$ eine mono-, oligo- oder perfluorierte Alkyl-Gruppe mit 1 bis 9 C-Atomen oder eine mono-, oligo- oder perfluorierte Aryl-Gruppe oder eine $R^1CH_2CH_2(CO)$-Gruppe mit $R^f = C_nF_{2n+1}$ und n = 2 bis 18, Y eine $CH_2$-, O- oder S-Gruppe, $R^2$ eine lineare, verzweigte oder cyclische Alkyl-Gruppe mit 1 bis 8 C-Atomen oder eine Aryl-Gruppe und R eine lineare, verzweigte oder cyclische Alkyl-Gruppe mit 1 bis 8 C-Atomen oder eine Aryl-Gruppe darstellen und $0 \leq y \leq 1$ ist,
und gegebenenfalls Organosilane der allgemeinen Formel IV

$$R^3\text{-}Si(CH_3)(OR)_2 \tag{IV},$$

und/oder Organosilane der allgemeinen Formel V

$$R^3\text{-}Si(OR)_3 \tag{V},$$

worin $R^3$ hier und in der vorangegangenen Formel eine lineare, verzweigte oder cyclische Alkyl-Gruppe mit 1 bis 8 C-Atomen bedeutet, $R^3$ hier und in der vorangegangenen Formel jeweils gleich oder verschieden ist, R hier und in der vorangegangenen Formel eine lineare, verzweigte oder cyclische Alkyl-Gruppe mit 1 bis 8 C-Atomen oder eine Aryl-Gruppe bedeutet und R jeweils gleich oder verschieden ist,

-    in dem molaren Verhältnis M = [a/(b+c+d)]≥ 0,1 mit a>0, b>0, c≥0, d≥0,
wobei a die Summe der Molzahlen der Organosilane gemäß Formel II, b die Summe der Molzahlen der Organosilane gemäß Formel III, Tridecafluor-1,1,2,2-tetrahydrooctyl- 1-triethoxysilan oder Tridecafluor-1,1,2,2-tetrahydrooctyl-1-trimethoxysilan sowie gegebenenfalls c die Summe der Molzahlen der Organosilane gemäß Formel IV sowie d gegebenenfalls die Summe der Molzahlen der Organosilane gemäß Formel V sind,

-    Versetzen des Gemisches mit Wasser oder einem Wasser/Säure-Gemisch und/oder einem Wasser/Säure/Alkohol-Gemisch,

- Einstellen des pH-Wertes der Reaktionsmischung auf einen Wert zwischen 1 und 8 und

- Entfernen des bereits vorhandenen und/oder bei der Umsetzung entstandenen Alkohols.

Ferner ist Gegenstand der vorliegenden Erfindung ein Verfahren zur Herstellung einer Organopolysiloxan-haltigen Zusammensetzung, das dadurch gekennzeichnet ist, daß man

- a Mol wasserlösliche Organosilane der allgemeinen Formel II,
  b Mol Organosilane der allgemeinen Formel III, Tridecafluor-1,1,2,2-tetrahydrooctyl-1-trimethoxysilan oder
  Tridecafluor-1,1,2,2-tetrahydrooctyl-1-triethoxysilan sowie gegebenenfalls
  c Mol Organosilane der allgemeinen Formeln IV und/oder gegebenenfalls
  d Mol Organosilane der allgemeinen Formel V

- in dem molaren Verhältnis $0,1 \leq [a/(b+c+d)]$ mit a>0, b>0, c≥0, d≥0 mischt,

- das Organosilangemisch mit Wasser oder einem Wasser/Säure-Gemisch und/oder einem Wasser/Säure/Alkohol-Gemisch vermischt,
  wobei man die Säuremenge so wählt, daß die Reaktionsmischung einen pH-Wert im Bereich von 1 bis 8 aufweist,

- und den bereits vorhandenen und/oder bei der Umsetzung entstandenen Alkohol entfernt.

Im allgemeinen führt man das erfindungsgemäße Verfahren wie folgt aus:
Zunächst kann man die einzusetzenden Alkoxysilane gemäß den allgemeinen Formeln II und III mischen, gegebenenfalls kann man hierbei zusätzlich auch Alkoxysilane der allgemeinen Formel IV und/oder V einsetzen. In der Regel kann man das Gemisch anschließend mit Wasser einer Cokondensation unterziehen, danach Säure oder ein Alkohol/Säure-Gemisch zufügt, wobei die Säuremenge geeigneterweise so gewählt wird, daß in der Reaktionsmischung ein pH-Wert zwischen 1 und 8 resultiert und die Alkoholmenge so gewählt wird, daß die Viskosität der resultierenden Reaktionsmischung einen Wert von 50 000 mPa•s nicht überschreitet sowie gegebenenfalls bereits vorhandenen bzw. den bei der Umsetzung entstehenden bzw. entstandenen Alkohol destillativ abtrennt, wobei die abgetrennte Alkoholmenge durch Wasser ersetzt werden kann, um die oben erwähnte Viskositätsgrenze nicht zu überschreiten. Das Überschreiten der Viskositätsgrenze führt im allgemeinen nicht zu Einschränkungen der prinzipiellen Wirksamkeit der beschriebenen Organopolysiloxanlösungen, kann jedoch verfahrenstechnische Probleme zur Folge haben. So hergestellte Produkte sind in der Regel wasserlösliche, in konzentrierter Form vorliegende, Fluoralkylgruppen-enthaltende Organopolysiloxanlösungen.

Alternativ kann man ein Cokondensat auch direkt durch Eintrag der Alkoxysilanmischung in ein Wasser/Säure- oder ein Wasser/Alkohol/Säure-Gemisch, Umsetzung der Komponenten und anschließende destillative Abtrennung der Hydrolysealkohole erhalten. Bevorzugt gibt man auch hier während der destillativen Abtrennung des Alkohols Wasser in dem Maße zu, wie Alkohol bzw. Alkohol/Wasser-Gemisch aus dem Reaktionsmedium entfernt wird. Zum Einstellen des pH-Wertes auf Werte zwischen 1 und 8 sind einbasige Säuren besonders geeignet. So hergestellte Produkte weisen eine geringere Silankonzentration als die oben beschriebenen Produkte auf, enthalten jedoch im Gegensatz zu diesen nahezu keinen freien Alkohol und setzen auch bei Verdünnen mit Wasser im wesentlichen keine weiteren Alkohole durch Hydrolyse frei.

Die erfindungsgemäßen Zusammensetzungen weisen im allgemeinen einen Flammpunkt von deutlich mehr als 70 °C auf.

Das Verfahren zur Herstellung der erfindungsgemäßen Organopolysiloxan-haltigen Zusammensetzungen kann wie nachfolgend im einzelnen beschrieben durchgeführt werden.

Vorzugsweise werden beim erfindungsgemäßen Verfahren zunächst wasserlösliche Organosilane der allgemeinen Formel 11 mit nicht wasserlöslichen Organosilanen der allgemeinen Formeln III gegebenenfalls mit solchen der allgemeinen Formeln IV und/oder V gemischt. Insbesondere setzt man folgende Organosilane erfindungsgemäß ein:

- Für Organosilane der allgemeinen Formel II bevorzugt man Aminopropyltriethoxysilan oder Aminopropyltrimethoxysilan oder Aminopropylmethyldiethoxysilan oder Aminopropylmethyldimethoxysilan oder deren Gemische.

- Für Fluoralkyl-funktionelle Organosilane der allgemeinen Formel III bevorzugt man solche Verbindungen, die $CF_3$ $(CF_2)_7$-, $CF_3(C_6H_4)$-, $C_6F_5$ - oder $R^fCH_2CH_2(C=O)$- mit $R^f = C_nF_{2n+1}$ und n = 2 bis 18 als Gruppe $R^1$ enthalten, so wie sie beispielsweise aus der noch nicht veröffentlichten deutschen Patentanmeldung mit der Nr. 196 44 561.2 hervorgehen. Besonders bevorzugt sind Tridecafluor-1,1,2,2-tetrahydrooctyl-1-trimethoxysilan oder Tridecafluor-1,1,2,2-tetrahydrooctyl-1-triethoxysilan oder entsprechende Gemische.

- Für Organosilane der allgemeinen Formel IV bevorzugt man Dimethyldimethoxysilan, Dimethyldiethoxysilan, Propylmethyldimethoxysilan oder Propylmethyldiethoxysilan oder deren Gemische.

- Für Organosilane der allgemeinen Formel V bevorzugt man Propyltrimethoxysilan, Propytriethoxysilan, Isobutyltrimethoxysilan oder Isobutyltriethoxysilan oder Oktyltrimethoxysilan oder Oktyltriethoxysilan oder deren Gemische.

Geeigneterweise genügt das molare Verhältnis der hier eingesetzten Organosilane der Beziehung $0,1 \leq [a/(b+c+d)]$, vorzugsweise $0,25 \leq [a/(b+c+d)] \leq 6000$, besonders vorzugsweise $1 \leq [a/(b+c+d)] \leq 3$.

Anschließend wird das Reaktionsgemisch einer Cokondensationsreaktion vorzugsweise mit 0,5 bis 30 Mole Wasser pro Mol Organosilan unterzogen. Besonders vorzugsweise verwendet man 0,5 bis 20 Mole Wasser; ganz besonders bevorzugt ist der Einsatz von 1 bis 5 Mole Wasser pro Mol der eingesetzten Silane.

Im Anschluß wird geeigneterweise mit Säure, einem Alkohol/Säure- oder einem Alkohol/Wasser/-Säure-Gemisch behandelt. Vorzugsweise verwendet man dabei Methanol, Ethanol, Propanol, Isopropanol, n-Butanol, i-Butanol, t-Butanol oder 2-Methoxyethanol als Alkohol.

Geeigneterweise wird der pH-Wert der Reaktionsmischung auf einen Wert zwischen 1 und 8, vorzugsweise auf einen Wert zwischen 1 und 6, besonders vorzugsweise auf einen Wert zwischen 1 und 5, eingestellt.

Als Säurekomponente wird im allgemeinen eine anorganische oder organische Säure, vorzugsweise eine einbasige Säure, besonders vorzugsweise Salpetersäure oder Salzsäure oder Essigsäure oder Ameisensäure oder Gemische der vorgenannten Säuren, eingesetzt.

Die Dosierung erfolgt bevorzugt portionsweise mit zeitlichen Unterbrechungen. Man kann den Vorgang der Dosierung aber auch kontinuierlich mit zeitlichen Unterbrechungen durchführen oder die diskontinuierliche und kontinuierliche Vorgehensweise der Dosierung miteinander in geeigneter Weise kombinieren.

Die Umsetzung wird im allgemeinen in einem Temperaturbereich zwischen 0 und 100 °C, vorzugsweise in einem Temperaturbereich zwischen 10 und 80 °C und besonders vorzugsweise zwischen 20 und 60 °C, durchgeführt. Geeigneterweise erfolgt die Umsetzung unter Rühren.

Der bereits vorhandene und/oder bei der Umsetzung entstandene Alkohol wird im allgemeinen aus dem Reaktionsgemisch entfernt. Vorzugsweise wird der bereits vorhandene und/oder bei der Umsetzung entstandene Alkohol destillativ entfernt und dabei gleichzeitig Wasser in dem Maße zugegeben, wie Alkohol aus dem Reaktionsgemisch entfernt wird. Die destillative Abtrennung des Alkohols wird vorzugsweise unter vermindertem Druck durchgeführt. Die destillative Abtrennung des Alkohols wird vorzugsweise solange durchgeführt, bis im Kopf der Kolonne eine Temperatur erreicht ist, die der Siedetemperatur von Wasser entspricht.

Die erfindungsgemäßen Zusammensetzungen sind im wesentlichen frei von organischen Lösemitteln, können aber geringe Mengen an freien Alkoholen, insbesondere Methanol und/oder Ethanol, enthalten. Der Alkohol-Gehalt in der erfindungsgemäßen Organopolysiloxan-haltigen Zusammensetzung beträgt vorzugsweise weniger als 5 Gew.-%. Besonders vorzugsweise stellt man den Restgehalt an Alkohol in den Organopolysiloxan-haltigen Zusammensetzungen auf Werte < 3 Gew.-%, ganz besonders vorzugsweise < 1 Gew.-%, ein.

Eine Einstellung des pH-Wertes im Reaktionsmedium kann durch Zugabe einer organischen oder anorganischen, insbesondere einer einwertigen Säure auch während und/oder nach der destillativen Abtrennung der Alkohole erfolgen.

Zur Verminderung der Schaumbildung wird vor und/oder während der destillativen Abtrennung des Alkohols vorzugsweise ein Entschäumer, besonders vorzugsweise eine wäßrige Silikonharz-Suspension, zugesetzt.

Manchmal treten während oder nach Beendigung der Destillation im Produkt Trübungen oder Ausfällungen auf, diese rühren vielfach von dem zugesetzten Entschäumer her. Um ein klares Produkt zu erhalten, wird geeigneterweise das erhaltene Produkt nach der destillativen Abtrennung des Alkohols durch Sedimentation und/oder Filtration nachgereinigt. Die Filtration sowie die Entfernung des Sediments kann beispielsweise über eine Drucknutsche, einen Separator, einen Dekanter oder ähnliche Apparate erfolgen.

Nach dem erfindungsgemäßen Verfahren hergestellte Produkte sind stabile und klare Lösungen. Die erfindungsgemäßen Organopolysiloxan-haltigen Zusammensetzungen lassen sich geeigneterweise mit Wasser in jedem Verhältnis verdünnen und sind im wesentlichen frei von organischen Lösemitteln sowie Tensiden als Emulgatoren.

Die Verwendung der erfindungsgemäßen bzw. erfindungsgemäß hergestellten Zusammensetzungen erfolgt mit deutlichen Vorteilen gegenüber eingangs beschriebenen Produkten. Bei Anwendung der erfindungsgemäßen Zusammensetzung kann man in hervorragender Weise eine hydrophobierende und zugleich oleophobierende Wirkung erzielen.

Gegenstand der vorliegenden Erfindung ist daher auch die Verwendung der erfindungsgemäßen Organopolysiloxan-haltigen Zusammensetzungen für die gleichzeitige Hydrophobierung und Oleophobierung sowie zur schmutz- und farbabweisenden Ausrüstung von Oberflächen, von Kunststoffen. von Metallen, von mineralischen Baustoffen, für den Schutz von Bauten und Fassaden, für die Beschichtung von Glasfasern, für die Silanierung von Füllstoffen und Pigmenten, für die Verbesserung der rheologischen Eigenschaften von Polymerdispersionen und Emulsionen, für die Hydrophobierung und Oleophobierung sowie zur schmutz- und farbabweisenden Ausrüstung von Textilien, Leder, Stärkeprodukten, Zelluloseprodukten, wie z. B. Holz, als Trennmittel, als Vernetzer, als Haftvermittler, insbesondere für Fluorpolymere, wie z. B. Teflon oder auf Fluorpolymeren basierenden Lacken, sowie als Zusatzstoffe für Farben und Lacke.

Die Erfindung wird durch die folgenden Beispiele näher erläutert, ohne den Gegenstand der vorliegenden Erfindung zu beschränken:

**Beispiele:**

Reaktionsapparatur für alle nachfolgenden Beispiele einschließlich Vergleichsbeispiel:

Laborrührkesselreaktor mit 2 l Inhalt, temperierbar, Innentemperaturmessung, Flüssigkeitsdosiereinrichtung, Destillationsbrücke mit Kopftemperaturmessung, Produktkühler, Destillatvorlagebehälter; Labordrucknutsche (2 l Inhalt).

Folgende Verfahrensparameter gelten für alle nachfolgenden Beispiele einschließlich Vergleichsbeispiel:

Schäumungsprobleme während der Destillation können verhindert werden, indem der Reaktionslösung einige Tropfen eines handelsüblichen Entschäumers auf Basis wäßriger Silikonharzemulsionen zugesetzt werden. Die aus dem Zusatz von Entschäumer resultierende leichte Trübung kann durch Filtration über eine Drucknutsche mit Glasfaserfilter (Porenweite < 1 μm) entfernt werden.

Die in den erfindungsgemäßen Beispielen 1 und 2 gewonnenen Produkte haben folgende Eigenschaften gemeinsam:

Das Produkt ist klar und in jedem Verhältnis mit Wasser mischbar. Der Gehalt an Alkoholen liegt bei ≤ 0,5 Gew.-%. Der Flammpunkt der Produkte liegt bei Werten > 95 °C und sinkt auch nicht bei weiterem Verdünnen mit Wasser, da keine weitere Hydrolyse stattfindet und somit keine weiteren Alkohole freigesetzt werden.

Legende der Abkürzungen:

DYNASYLAN® 1203, AMEO = 3-Aminopropyltriethoxysilan,
VPS 8161 = Tridecafluor-1,1,2,2-tetrahydrooctyl-1-trimethoxysilan
VPS 8261 = Tridecafluor-1,1,2,2-tetrahydrooctyl-1-triethoxysilan
PTMO = n-Propyltrimethoxysilan
PMDMO = n-Propylmethyldimethoxysilan

**Beispiel 1:**

Herstellung eines wasserlöslichen Cohydrolysates aus DYNASYLAN® 1203 und VPS 8161 (Tridecafluor-1,1,2,2-tetrahydrooctyl-1-trimethoxisilan) im molaren Verhältnis von 3:1

In der oben beschriebenen Apparatur werden 14,2 g DYNASYLAN® 1203 und 10,0 g VPS 8161 vorgelegt. 3,1 g Wasser werden zugegeben. Die Temperatur steigt hierbei von 20 °C auf 30 °C. Das Reaktionsgemisch wird 3 Stunden bei 50 °C gerührt.

Anschließend wird ein Gemisch aus 220,0 g Wasser und 4,2 g Ameisensäure (84 Gew.-% in Wasser) innerhalb von 5 Minuten zudosiert. Innerhalb von ca. 2 Stunden wird ein Ethanol/Methanol/Wasser-Gemisch abdestilliert (Druck: 150-133 mbar; Temperatur: 30-48 °C). Wenn die Kopftemperatur ca. 50 °C beträgt und das Kopfprodukt nur noch Wasser enthält, wird die Destillation beendet und das Produkt wird mit Wasser auf 1 000 g verdünnt.

**Beispiel 2:**

Herstellung eines wasserlöslichen Cohydrolysates aus DYNASYLAN® 1203, PMDMO, PTMO und VPS 8161 im molaren Verhältnis von 2:1:1:0,02

In der oben beschriebenen Apparatur mit einem 1 l Rührreaktor werden 110,5 g DYNASYLAN® 1203, 41,0 g PTMO, 30,0 g PMDMO und 2,6 g VPS 8161 vorgelegt. 36,2 g Wasser werden innerhalb von 5 Minuten über die Dosiervorrichtung zugegeben. Die Temperatur steigt hierbei von 20 °C auf 40 °C. Das Reaktionsgemisch wird 2 Stunden bei 60 °C gerührt. Danach werden 54,5 g des entstandenen Hydrolysealkohols abdestilliert (Druck: 250 mbar; Temperatur: 42 °C). 117g Wasser und 32,5 g Ameisensäure (85 Gew.-% in Wasser) werden gemischt und innerhalb von ca. 20 Minuten zugegeben. Dabei steigt die Temperatur von 44 °C auf 48 °C. Innerhalb von ca 4 Stunden wird ein Ethanol/Methanol/Wasser-Gemisch abdestilliert und gleichzeitig durch Wasser ersetzt, so daß die Konzentration der Lösung konstant bleibt (Druck: 200-133 mbar; Temperatur: 44-50 °C). Wenn die Kopftemperatur ca. 50 °C beträgt und das Kopfprodukt nur noch Wasser enthält, wird die Destillation beendet und das Produkt mit Wasser auf 955 g verdünnt.

**Beispiel 3:**

Herstellung eines wasserlöslichen Cohydrolysates aus DYNASYLAN® 1203 und VPS 8161 im molaren Verhältnis 1:1

In der oben beschriebenen Apparatur mit einem 250 ml Rührreaktor werden 44,2 g DYNASYLAN 1203 und 93,4 g VPS 8161 vorgelegt. 14,4 g Wasser werden über die Dosiervorrichtung zugegeben. Die Temperatur steigt hierbei von 20 °C auf 30 °C. Das Reaktionsgemisch wird 3 Stunden bei 55-60 °C gerührt. Anschließend wird das Reaktionsgemisch auf ca. 30 °C abgekühlt und innerhalb von ca. 10 Minuten werden 11,9 g Ameisensäure (85 Gew.-% in Wasser) zugegeben. Die Temperatur steigt dabei auf ca. 40-50 °C an. Dieses Konzentrat ist in jedem Verhältnis mit Wasser mischbar.

**Beispiel 4:**

Herstellung eines wasserlöslichen Cohydrolysates aus DYNASYLAN® 1203 und VPS 8281 im molaren Verhältnis 1:1

In der oben beschriebenen Apparatur mit einem 250 ml Rührreaktor werden 44,2 g DYNASYLAN 1203 und 102 g VPS 8261 vorgelegt. 14,4 g Wasser werden über die Dosiervorrichtung zugegeben. Die Temperatur steigt hierbei von 20 °C auf 30 °C. Das Reaktionsgemisch wird 3 Stunden bei 55-60 °C gerührt. Anschließend wird das Reaktionsgemisch auf ca. 30 °C abgekühlt. Innerhalb von ca. 10 Min. werden 11,9 g Ameisensäure (85 Gew.-% in Wasser) zugegeben. Die Temperatur steigt hierbei auf ca. 40-50 °C an. Dieses Konzentrat ist in jedem Verhältnis mit Wasser mischbar. Das Produkt ist viskos. Durch Zugabe von Alkoholen (Methanol, Ethanol) kann die Viskosität deutlich gesenkt werden.

**Beispiel 5:**

Behandlung von mineralischen Oberflächen mit dem Produkt aus Beispiel 1

Ziegel-, Kalksand- und Betonsteine wurden in Quader mit einer Kantenlänge von ca. 5 cm geschnitten und ca. 5 Minuten in die wäßrige, erfindungsgemäße Zubereitung aus Beispiel 1 getaucht. Nach Trocknung der Steine bei Raumtemperatur oder im Trockenschrank bei ca. 120 °C dringt auf die Oberfläche der Steine aufgetragenes Wasser sowie auch Öl (Mineralöl, Thermoöl -Marlotherm S = Tritoluol- oder auch Siliconöl) nicht mehr in die Oberfläche der Baustoffe ein. Der Abperleffekt für die genannten Flüssigkeiten ist sehr gut. Bei unbehandelten Proben dringen die genannten Flüssigkeiten sofort in die Oberfläche ein. Das Produkt eignet sich damit zur gleichzeitigen Hydro- und Oleophobierung von mineralischen Baustoffen.

**Beispiel 5a:**

Behandlung von mineralischen Oberflächen mit dem Produkt aus Beispiel 1

Ziegel-, Kalksand- und Betonsteine wurden in Quader mit einer Kantenlänge von ca. 5 cm geschnitten und ca. 5 Minuten in die wäßrige, erfindungsgemäße Zubereitung aus Beispiel 1 (in einer Weise mit Wasser verdünnt, daß eine 0,01 Gew.-% Lösung, bezogen auf das eingesetzte Fluoralkylalkoxysilan, resultiert) getaucht. Nach Trocknung der Steine bei Raumtemperatur oder im Trockenschrank bei ca. 120 °C dringt auf die Oberfläche der Steine aufgetragenes Wasser sowie auch Öl (Mineralöl, Thermoöl -Marlotherm S = Tritoluol- oder auch Siliconöl) nicht mehr in die Oberfläche der Baustoffe ein. Der Abperleffekt für die genannten Flüssigkeiten ist sehr gut. Bei unbehandelten Proben dringen die genannten Flüssigkeiten sofort in die Oberfläche ein. Das Produkt eignet sich damit zur gleichzeitigen Hydro- und Oleophobierung von mineralischen Baustoffen.

**Beispiel 5b:**

Behandlung von mineralischen Oberflächen mit dem Produkt aus Beispiel 1

Ziegel-, Kalksand- und Betonsteine wurden in Quader mit einer Kantenlänge von ca. 5 cm geschnitten und ca. 5 Minuten in die wäßrige, erfindungsgemäße Zubereitung aus Beispiel 1 (in einer Weise mit Wasser verdünnt, daß eine 0,005 Gew.-% Lösung, bezogen auf das eingesetzte Fluoralkylalkoxysilan, resultiert) getaucht. Nach Trocknung der Steine bei Raumtemperatur oder im Trockenschrank bei ca. 120 °C dringt auf die Oberfläche der Steine aufgetragenes Wasser sowie auch Öl (Mineralöl, Thermoöl -Marlotherm S = Tritoluol- oder auch Siliconöl) nach einigen Minuten in die Oberfläche der Baustoffe ein. Ein Abperleffekt für die genannten Flüssigkeiten ist zwar noch vorhanden, jedoch nur von kurzer Dauer. Bei unbehandelten Proben dringen die genannten Flüssigkeiten sofort in die Oberfläche ein. Das Produkt eignet sich damit eingeschränkt zur gleichzeitigen Hydro- und Oleophobierung von mineralischen Baustoffen.

**Beispiel 5c: (Vergleichsbeispiel)**

Behandlung von mineralischen Oberflächen mit dem Produkt aus Beispiel 1

Ziegel-, Kalksand- und Betonsteine wurden in Quader mit einer Kantenlänge von ca. 5 cm geschnitten und ca. 5 Minuten in die wäßrige, erfindungsgemäße Zubereitung aus Beispiel 1 (in einer Weise mit Wasser verdünnt, daß eine 0,001 Gew.-% Lösung, bezogen auf das eingesetzte Fluoralkylalkoxysilan, resultiert) getaucht. Nach Trocknung der Steine bei Raumtemperatur oder im Trockenschrank bei ca. 120 °C dringt auf die Oberfläche der Steine aufgetragenes Wasser sowie auch Öl (Mineralöl, Thermoöl -Marlotherm S = Tritoluol- oder auch Siliconöl) in die Oberfläche der Baustoffe ein. Ein Abperleffekt für die genannten Flüssigkeiten wird nicht mehr beobachtet. Bei unbehandelten Proben dringen die genannten Flüssigkeiten ebenfalls sofort in die Oberfläche ein. Das Produkt eignet sich damit nicht zur gleichzeitigen Hydro- und Oleophobierung von mineralischen Baustoffen.

**Beispiel 6:**

Behandlung von Baumwolle mit dem Produkt aus Beispiel 1

Baumwolle wurde in Quadrate mit einer Kantenlänge von ca. 5 cm geschnitten und ca. 5 Minuten in die wäßrige, erfindungsgemäße Zubereitung aus Beispiel 1 getaucht. Nach Trocknung der Stoffstücke bei Raumtemperatur oder im Trockenschrank bei ca. 120 °C dringt auf die Oberfläche der Stoffstücke aufgetragenes Wasser sowie auch Öl (Mineralöl, Thermoöl -Marlotherm S = Tritoluol- oder auch Siliconöl) nicht mehr in die Oberfläche der Stoffstücke ein. Der Abperleffekt für die genannten Flüssigkeiten ist sehr gut. Bei unbehandelten Proben dringen die genannten Flüssigkeiten sofort in die Oberfläche ein. Das Produkt eignet sich damit zur gleichzeitigen Hydro- und Oleophobierung von Baumwolle.

**Beispiel 7:**

Behandlung von Holz mit dem Produkt aus Beispiel 1

Eine ca. 0,5 cm starke Holzplatte wurde in Rechtecke mit einer Kantenlänge von ca. 3x5 cm geschnitten und ca. 5 Minuten in die wäßrige, erfindungsgemäße Zubereitung aus Beispiel 1 getaucht. Nach Trocknung der Holzstücke bei Raumtemperatur oder im Trockenschrank bei ca. 120 °C dringt auf die Oberfläche der Holzstücke aufgetragenes Wasser sowie auch Öl (Mineralöl, Thermoöl -Marlotherm S = Tritoluol- oder auch Siliconöl) nicht mehr in die Oberfläche der Holzstücke ein. Der Abperleffekt für die genannten Flüssigkeiten ist sehr gut. Bei unbehandelten Proben dringen die genannten Flüssigkeiten sofort in die Oberfläche ein. Das Produkt eignet sich damit zur gleichzeitigen Hydro- und Oleophobierung von Holz.

**Beispiel 8:**

Behandlung von Papier mit dem Produkt aus Beispiel 1

Papiertaschentücher wurden in Stücke mit einer Kantenlänge von ca. 5 cm geschnitten und ca. 5 Minuten in die wäßrige, erfindungsgemäße Zubereitung aus Beispiel 1 getaucht. Nach Trocknung der Papierstücke bei Raumtemperatur oder im Trockenschrank bei ca. 120 °C dringt auf die Oberfläche der Papierstücke aufgetragenes Wasser sowie auch Öl (Mineralöl, Thermoöl -Marlotherm S = Tritoluol- oder auch Siliconöl) nicht mehr in die Oberfläche der Stoffstücke ein. Der Abperleffekt für die genannten Flüssigkeiten ist sehr gut. Bei unbehandelten Proben dringen die genannten Flüssigkeiten sofort in die Oberfläche ein. Das Produkt eignet sich damit zur gleichzeitigen Hydro- und Oleophobierung von Papier

**Beispiel 9:**

Behandlung von Glas mit dem Produkt aus Beispiel 1

Glasscheiben mit einer Kantenlänge von ca. 10x20 cm wurden ca. 5 Minuten in die wäßrige, erfindungsgemäße Zubereitung aus Beispiel 1 getaucht. Nach Abtropfen und Trocknung der Glasscheiben bei Raumtemperatur oder im Trockenschrank bei ca. 120 °C perlt auf die Oberfläche der Glasscheiben aufgetragenes Wasser sowie auch Öl (Mineralöl, Thermoöl -Marlotherm S = Tritoluol- oder auch Siliconöl) deutlich ab. Der Randwinkel für die genannten Flüssigkeiten ist > 90 °. Bei unbehandelten Proben ist der Randwinkel deutlich kleiner als 90 °. Das Produkt hinterläßt auf der Glasscheibe einen Film und eignet sich zur gleichzeitigen Hydro- und Oleophobierung von Glas.

**Beispiel 10:**

Behandlung von Metalloberflächen mit dem Produkt aus Beispiel 1

Ca. 1 mm starke, sandgestrahlte Stahlplatten sowie Al-Folie mit einer Kantenlänge von ca. 10x20 cm wurden ca. 5 Minuten in die wäßrige, erfindungsgemäße Zubereitung aus Beispiel 1 getaucht. Nach Abtropfen und Trocknung der Stahlstücke bei Raumtemperatur oder im Trockenschrank bei ca. 120 °C perlt auf die Oberfläche der Stahlstücke aufgetragenes Wasser sowie auch Öl (Mineralöl, Thermoöl -Marlotherm S = Tritoluol- oder auch Siliconöl) deutlich ab. Das Produkt erzeugt einen Film auf der Metalloberfläche. Die visuell beurteilten Randwinkel sind bei den behandelten Metallproben deutlich höher als bei nicht behandelten. Das Produkt eignet sich damit zur gleichzeitigen Hydro- und Oleophobierung von Metalloberflächen. Lagerung beschichteter und unbeschichteter Stahlplatten in wäßriger HCl-Lösung zeigt eine deutlich geringere Korrosion bei den mit wäßriger, erfindungsgemäßer Zubereitung aus Beispiel 1 beschichteten Stahlplatten.

**Beispiel 11:**

Behandlung von Leder mit dem Produkt aus Beispiel 1

Saugfähiges Leder (Fensterleder) wurde ca. 5 Minuten in die wäßrige, erfindungsgemäße Zubereitung aus Beispiel 1 getaucht. Nach Trocknung der Lederstücke bei Raumtemperatur oder im Trockenschrank bei ca 120 °C dringt auf die Oberfläche der Lederstücke aufgetragenes Wasser sowie auch Öl (Mineralöl, Thermoöl -Marlotherm S = Tritoluol- oder auch Siliconöl) nicht mehr in die Oberfläche der Lederstücke ein. Der Abperleffekt für die genannten Flüssigkeiten ist sehr gut. Bei unbehandelten Proben dringen die genannten Flüssigkeiten sofort in die Oberfläche ein. Das Produkt eignet sich damit zur gleichzeitigen Hydro- und Oleophobierung von Leder.

**Beispiel 12:**

Behandlung von Kunststoffoberflächen mit dem Produkt aus Beispiel 1

Ca. 1 mm starke MMA-Kunststoffplatten wurden ca. 5 Minuten in die wäßrige, erfindungsgemäße Zubereitung aus Beispiel 1 getaucht. Nach Abtropfen und Trocknung der Kunstoffplättchen bei Raumtemperatur oder im Trockenschrank bei ca. 90 °C perlt auf die Oberfläche der Kunststoffstücke aufgetragenes Wasser sowie auch Öl (Mineralöl, Thermoöl -Marlotherm S = Tritoluol- oder auch Siliconöl) deutlich ab. Der Abperleffekt für die genannten Flüssigkeiten ist sehr gut Bei unbehandelten Proben ist der Randwinkel wesentlich geringer (visuelle Beurteilung). Das Produkt eignet sich damit zur gleichzeitigen Hydro- und Oleophobierung von Kunststoffoberflächen.

**Patentansprüche**

1. Organopolysiloxan-haltige Zusammensetzung auf Wasserbasis, die frei ist von Tensiden, von Methoxy-funktionellen Aminosilsesquioxanen sowie von Silikonharz-haltigen Mikroemulsionen, im wesentlichen frei von organischen Lösemitteln ist, einen Flammpunkt von mehr als 70 °C besitzt und bei Verdünnen mit Wasser im wesentlichen keine Alkohole durch Hydrolyse freisetzt, wobei die Zusammensetzung Organopolysiloxane der allgemeinen Formel I

$$HO[Si(A)CH_3)_z(OH)_{1-z}O]_a[Si(B)(R^2)_y(OH)_{1-y}O]_b[Si(C)(CH_3)O]_c[Si(D)(OH)O]_dH \cdot (HX)_e \qquad (I),$$

worin A einen Aminoalkyl-Rest, abgeleitet aus der allgemeinen Formel II

$$H_2N(CH_2)_f(NH)_g(CH_2)_hSi(OR)_{3-z}(CH_3)_z \qquad (II),$$

wobei $0 \leq f \leq 6$, g=0 falls f=0 und g=1 falls f>0, $0 \leq h \leq 6$ und $0 \leq z \leq 1$ sind,
und B einen Fluororgano-Rest, abgeleitet aus Tridecafluor-1,1,2,2-tetrahydrooctyl-1-trimethoxysilan oder Tridecafluor-1,1,2,2-tetrahydrooctyl-1-triethoxysilan oder aus der allgemeinen Formel III

$$R^1-Y-(CH_2)_2Si(R^2)_y(OR)_{3-y} \qquad (III),$$

wobei $R^1$ eine mono-, oligo- oder perfluorierte Alkyl-Gruppe mit 1 bis 9 C-Atomen oder eine mono-, oligo- oder perfluorierte Aryl-Gruppe oder eine $R^fCH_2CH_2(CO)$-Gruppe mit $R^f = C_nF_{2n+1}$ und n = 2 bis 18, Y eine $CH_2$-, O- oder S-Gruppe, $R^2$ eine lineare, verzweigte oder cyclische Alkyl-Gruppe mit 1 bis 8 C-Atomen oder eine Aryl-Gruppe bedeuten und $0 \leq y \leq 1$ ist,
und C einen Alkyl-Rest, abgeleitet aus der allgemeinen Formel IV

$$R^3-Si(CH_3)(OR)_2 \qquad (IV),$$

und D ebenfalls einen Alkyl-Rest, jedoch abgeleitet aus der allgemeinen Formel V

$$R^3-Si(OR)_3 \qquad (V),$$

wobei $R^1$ in den vorangegangenen Formeln eine lineare, verzweigte oder cyclische Alkyl-Gruppe mit 1 bis 8 C-Atomen bedeutet, $R^3$ in den vorangegangenen Formeln jeweils gleich oder verschieden ist, R in den vorangegangenen Formeln eine lineare, verzweigte oder cyclische Alkyl-Gruppe mit 1 bis 8 C-Atomen oder eine Aryl-Gruppe bedeutet und R in den vorangegangenen Formeln jeweils gleich oder verschieden ist,

und HX eine Säure darstellen, wobei X ein anorganischer oder organischer Säure-Rest ist,
und $0 \leq y \leq 1$, $0 \leq z \leq 1$, a>0, b>0, $c \geq 0$, $d \geq 0$, $e \geq 0$ und $(a+b+c+d) \geq 2$ sind,

enthält und der Gehalt an Organopolysiloxanen als Wirkstoff in der Zusammensetzung mindestens 0,005 Gew.-% und der Alkoholgehalt weniger als 3 Gew.-% beträgt.

2. Zusammensetzung nach Anspruch 1,
dadurch gekennzeichnet,
daß diese einen pH-Wert zwischen 1 und 8 besitzt.

3. Zusammensetzung nach Anspruch 1 oder 2,
dadurch gekennzeichnet,
daß diese eine einwertige anorganische und/oder organische Säure und/oder deren Folgeprodukte enthält.

**4.** Zusammensetzung nach mindestens einem der Ansprüche 1 bis 3,
dadurch gekennzeichnet,
daß der Alkohol-Gehalt in der Organopolysiloxan-haltigen Zusammensetzung weniger als 1 Gew.-% beträgt.

**5.** Zusammensetzung nach mindestens einem der Ansprüche 1 bis 4,
dadurch gekennzeichnet,
daß der Gehalt an Organopolysiloxanen als Wirkstoff in der Zusammensetzung 0,005 bis 60 Gew.-% beträgt.

**6.** Organopolysiloxan-haltige Zusammensetzungen nach mindestens einem der Ansprüche 1 bis 5,
erhältlich durch

- Mischen wasserlöslicher Organosilane der allgemeinen Formel II

$$H_2N(CH_2)_f(NH)_g(CH_2)_h- Si(CH_3)_z(OR)_{3-z} \qquad (II),$$

worin $0 \leq f \leq 6$, $g=0$ falls $f=0$ und $g=1$ falls $f>1$, $0 \leq h \leq 6$, $0 \leq z \leq 1$ und
R eine lineare, verzweigte oder cyclische Alkyl-Gruppe mit 1 bis 8 C-Atomen oder Aryl-Gruppe sind,
mit Tridecafluor-1,1,2,2-tetrahydrooctyl-1-trimethoxysilan, Tridecafluor-1,1,2,2-tetrahydrooctyl-1-triethoxysilan oder Fluororgano-funktionellen Organosilanen der allgemeinen Formel III

$$R^1-Y-(CH_2)_2Si(R^2)_y(OR)_{3-y} \qquad (III),$$

worin $R^1$ eine mono-, oligo- oder perfluorierte Alkyl-Gruppe mit 1 bis 9 C-Atomen oder eine mono-, oligo-
oder perfluorierte Aryl-Gruppe oder eine $R^fCH_2CH_2(CO)$-Gruppe mit $R^f = C_nF_{2n+1}$ und $n = 2$ bis 18, Y eine
$CH_2$-, O- oder S-Gruppe, $R^2$ eine lineare, verzweigte oder cyclische Alkyl-Gruppe mit 1 bis 8 C-Atomen oder
eine Aryl-Gruppe und R eine lineare, verzweigte oder cyclische Alkyl-Gruppe mit 1 bis 8 C-Atomen oder eine
Aryl-Gruppe darstellen und $0 \leq y \leq 1$ ist,
und gegebenenfalls Organosilane der allgemeinen Formel IV

$$R^3-Si(CH_3)(OR)_2 \qquad (IV),$$

und/oder Organosilane der allgemeinen Formel V

$$R^3-Si(OR)_3 \qquad (V),$$

worin $R^3$ hier und in der vorangegangenen Formel eine lineare, verzweigte oder cyclische Alkyl-Gruppe mit
1 bis 8 C-Atomen bedeutet, $R^3$ hier und in der vorangegangenen Formel jeweils gleich oder verschieden ist,
R hier und in der vorangegangenen Formel eine lineare, verzweigte oder cyclische Alkyl-Gruppe mit 1 bis 8
C-Atomen oder eine Aryl-Gruppe bedeutet und R jeweils gleich oder verschieden ist,

- in dem molaren Verhältnis M = [a/(b+c+d)] ≥ 0,1 mit a>0, b>0, c≥0, d≥0,
wobei a die Summe der Molzahlen der Organosilane gemäß Formel II, b die Summe der Molzahlen der Organosilane gemäß Formel III, Tridecafluor-1,1,2,2-tetrahydrooctyl-1-triethoxysilan oder Tridecafluor-
1,1,2,2-tetrahydrooctyl-1-trimethoxysilan sowie gegebenenfalls c die Summe der Molzahlen der Organosilane
gemäß Formel IV sowie d gegebenenfalls die Summe der Molzahlen der Organosilane gemäß Formel V sind,

- Versetzen des Gemisches mit Wasser oder einem Wasser/Säure-Gemisch und/oder einem Wasser/Säure/
Alkohol-Gemisch,

- Einstellen des pH-Wertes der Reaktionsmischung auf einen Wert zwischen 1 und 8 und

- Entfernen des bereits vorhandenen und/oder bei der Umsetzung entstandenen Alkohols

7. Verfahren zur Herstellung einer Organopolysiloxan-haltigen Zusammensetzung nach mindestens einem der Ansprüche 1 bis 6,
dadurch gekennzeichnet,
daß man

- a Mol wasserlösliche Organosilane der allgemeinen Formel II,
b Mol Organosilane der allgemeinen Formel III, Tridecafluor-1,1,2,2-tetrahydrooctyl-1-trimethoxysilan oder Tridecafluor-1,1,2,2-tetrahydrooctyl-1-triethoxysilan sowie gegebenenfalls
c Mol Organosilane der allgemeinen Formeln IV und/oder gegebenenfalls
d Mol Organosilane der allgemeinen Formel V

- in dem molaren Verhältnis $0,1 \leq [a/(b+c+d)]$ mit a>0, b>0, c≥0, d≥0 mischt,

- das Organosilangemisch mit Wasser oder einem Wasser/Säure-Gemisch und/oder einem Wasser/Säure/Alkohol-Gemisch vermischt, wobei man die Säuremenge so wählt, daß die Reaktionsmischung einen pH-Wert im Bereich von 1 bis 8 aufweist,

- und den bereits vorhandenen und/oder bei der Umsetzung entstandenen Alkohol entfernt.

8. Verfahren nach Anspruch 7,
dadurch gekennzeichnet,
daß man die eingesetzten Organosilane mit 0,5 bis 30 Molen Wasser pro Mol Organosilan cokondensiert.

9. Verfahren nach Anspruch 7 oder 8,
dadurch gekennzeichnet,
daß man eine einbasige Säure einsetzt.

10. Verfahren nach mindestens einem der Ansprüche 7 bis 9,
dadurch gekennzeichnet,
daß man die Umsetzung in einem Temperaturbereich zwischen 0 und 100 °C durchführt.

11. Verfahren nach mindestens einem der Ansprüche 7 bis 10,
dadurch gekennzeichnet,
daß man bereits vorhandenen und/oder bei der Umsetzung entstandenen Alkohol destillativ entfernt und dabei gleichzeitig Wasser in dem Maße zugibt, wie Alkohol aus dem Reaktionsmedium entfernt wird.

12. Verfahren nach mindestens einem der Ansprüche 7 bis 11,
dadurch gekennzeichnet,
daß man die destillative Abtrennung des Alkohols unter vermindertem Druck durchführt.

13. Verfahren nach mindestens einem der Ansprüche 7 bis 12,
dadurch gekennzeichnet,
daß man die destillative Abtrennung des Alkohols solange durchführt, bis am Kopf der Kolonne eine Temperatur erreicht ist, die der Siedetemperatur von Wasser entspricht.

14. Verfahren nach mindestens einem der Ansprüche 7 bis 13,
dadurch gekennzeichnet,
daß man zur Verminderung der Schaumbildung vor und/oder während der destillativen Abtrennung des Alkohols einen Entschäumer zusetzt.

15. Verfahren nach mindestens einem der Ansprüche 7 bis 14,
dadurch gekennzeichnet,
daß man den Restgehalt an Alkohol in der Organopolysiloxan-haltigen Zusammensetzung auf einen Wert < 3 Gew.-% einstellt.

16. Verfahren nach mindestens einem der Ansprüche 7 bis 15,
dadurch gekennzeichnet,
daß man das erhaltene Produkt nach der destillativen Abtrennung des Alkohols durch Sedimentation und/oder Filtration nachreinigt.

17. Verwendung Organopolysiloxan-haltiger Zusammensetzungen auf Wasserbasis nach den Ansprüchen 1 bis 16 für die gleichzeitige Hydrophobierung und Oleophobierung sowie zur schmutz- und farbabweisenden Ausrüstung von Oberflächen, von Metallen, von Kunststoffen, von mineralischen Baustoffen, für den Schutz von Bauten und Fassaden, für die Beschichtung von Glasfasern, für die Silanisierung von Füllstoffen und Pigmenten, für die Verbesserung der rheologischen Eigenschaften von Polymerdispersionen und Emulsionen, für die Hydrophobierung und Oleophobierung sowie zur schmutz- und farbabweisenden Ausrüstung von Textilien, Leder, Zellulose- und Stärkeprodukten sowie als Trennmittel, als Vernetzer, als Haftvermittler sowie als Zusatzstoffe für Farben und Lacke.

**Claims**

1. An organopolysiloxane-containing composition based on water, which is free from surfactants, from methoxy-functional aminosilsesquioxanes and from silicone resin-containing microemulsions, is essentially free from organic solvents, has a flash point of more than 70°C and liberates essentially no alcohols by hydrolysis on dilution with water, the composition comprising organopolysiloxanes of the general formula I

$$HO[Si(A)(CH_3)_z(OH)_{1-z}O]_a[Si(B)(R^2)_y(OH)_{1-y}O]_b[Si(C)(CH_3)O]_c[Si(D)(OH)O]_dH.(HX)_e \qquad (I),$$

in which A is an aminoalkyl radical derived from the general formula II

$$H_2N(CH_2)_f(NH)_g(CH_2)_hSi(OR)_{3-z}(CH_3)_z \qquad (II),$$

in which $0 \leq f \leq 6$, g=0 if f=0 and g=1 if f>0, $0 \leq h \leq 6$ and $0 \leq z \leq 1$,
and B is a fluoroorgano radical derived from tridecafluoro-1,1,2,2-tetrahydrooctyl-1-trimethoxysilane or tridecafluoro-1,1,2,2-tetrahydrooctyl-1-triethoxysilane or from the general formula III

$$R^1\text{-}Y\text{-}(CH_2)_2Si(R^2)_y(OR)_{3-y} \qquad (III),$$

in which $R^1$ is a mono-, oligo- or perfluorinated alkyl group having 1 to 9 C atoms or a mono-, oligo- or perfluorinated aryl group or an $R^fCH_2CH_2(CO)$ group where $R^f = C_nF_{2n+1}$ and n = 2 to 18, Y is a $CH_2$, O or S group, $R^2$ is a linear, branched or cyclic alkyl group having 1 to 8 C atoms or an aryl group and $0 \leq y \leq 1$,
and C is an alkyl radical derived from the general formula IV

$$R^3\text{-}Si(CH_3)(OR)_2 \qquad (IV),$$

and D is likewise an alkyl radical, but derived from the general formula V

$$R^3\text{-}Si(OR)_3 \qquad (V),$$

in which $R^3$ in the preceding formulae is a linear, branched or cyclic alkyl group having 1 to 8 C atoms, $R^3$ in the preceding formulae is in each case identical or different,
R in the preceding formulae is a linear, branched or cyclic alkyl group having 1 to 8 C atoms or an aryl group, and R in the preceding formulae is in each case identical or different,

and HX is an acid, in which X is an inorganic or organic acid radical,
and $0 \leq y \leq 1$, $0 \leq z \leq 1$, a>0, b>0, $c \geq 0$, $d \geq 0$, $e \geq 0$ and $(a+b+c+d) \geq 2$,
and the content of organopolysiloxanes as the active compound in the composition is at least 0.005% by weight and the alcohol content is less than 3% by weight.

**2.** A composition according to claim 1,
which
has a pH from 1 to 8.

**3.** A composition according to claim 1 or 2,
which
comprises a monobasic inorganic and/or organic acid and/or secondary products thereof.

**4.** A composition according to at least one of claims 1 to 3,
characterized in that
the alcohol content in the organopolysiloxane-containing composition is less than 1% by weight.

**5.** A composition according to at least one of claims 1 to 4,
characterized in that
the content of organopolysiloxanes as the active compound in the composition is from 0.005 to 60% by weight.

**6.** An organopolysiloxane-containing composition according to at least one of claims 1 to 5, obtainable by

- mixing water-soluble organosilanes of the general formula II

$$H_2N(CH_2)_f(NH)_g(CH_2)_h\text{-}Si(CH_3)_z(OR)_{3\text{-}z} \qquad (II),$$

in which $0 \leq f \leq 6$, g=0 if f=0 and g=1 if f>1, $0 \leq h \leq 6$, $0 \leq z \leq 1$ and
R is a linear, branched or cyclic alkyl group having 1 to 8 C atoms or an aryl group, with tridecafluoro-1,1,2,2-tetrahydrooctyl-1-trimethoxysilane, tridecafluoro-1,1,2,2-tetrahydrooctyl-1-triethoxysilane or fluoroorganofunctional organosilanes of the general formula III

$$R^1\text{-}Y\text{-}(CH_2)_2Si(R^2)_y(OR)_{3\text{-}y} \qquad (III),$$

in which $R^1$ is a mono-, oligo- or perfluorinated alkyl group having 1 to 9 C atoms or a mono-, oligo- or perfluorinated aryl group or an $R^fCH_2CH_2(CO)$ group where $R^f = C_nF_{2n+1}$ and n = 2 to 18, Y is a $CH_2$, O or S group, $R^2$ is a linear, branched or cyclic alkyl group having 1 to 8 C atoms or an aryl group and R is a linear, branched or cyclic alkyl group having 1 to 8 C atoms or an aryl group and $0 \leq y \leq 1$,
and, if desired, organosilanes of the general formula IV

$$R^3\text{-}Si(CH_3)(OR)_2 \qquad (IV),$$

and/or organosilanes of the general formula V

$$R^3\text{-}Si(OR)_3 \qquad (V)$$

in which $R^3$ here and in the preceding formula is a linear, branched or cyclic alkyl group having 1 to 8 C atoms, $R^3$ here and in the preceding formula is in each case identical or different, R here and in the preceding formula is a linear, branched or cyclic alkyl group having 1 to 8 C atoms or an aryl group and R is in each case identical or different,

- in a molar ratio of M = [a/(b+c+d)]$\geq$0.1 where a>0, b>0, c$\geq$0, d$\geq$0,
in which a is the sum of the numbers of moles of the organosilanes according to formula II, b is the sum of the numbers of moles of the organosilanes according to formula III, tridecafluoro-1,1,2,2-tetrahydrooctyl-1-triethoxysilane or tridecafluoro-1,1,2,2-tetrahydrooctyl-1-trimethoxysilane and, if desired, c is the sum of the numbers of moles of the organosilanes according to formula IV and d, if desired, is the sum of the numbers of moles of the organosilanes according to formula V,

- adding water or a water/acid mixture and/or a water/acid/alcohol mixture to the mixture,

- adjusting the pH of the reaction mixture to a value from 1 to 8 and

- removing the alcohol already present and/or formed during the reaction.

7. A process for the preparation of an organopolysiloxane-containing composition according to at least one of claims 1 to 6,
characterized in that

- a moles of water-soluble organosilanes of the general formula II,
b moles of organosilanes of the general formula III, tridecafluoro-1,1,2,2-tetrahydrooctyl-1-trimethoxysilane or tridecafluoro-1,1,2,2-tetrahydrooctyl-1-triethoxysilane and, if desired,
c moles of organosilanes of the general formula IV and/or, if desired,
d moles of organosilanes of the general formula V

- are mixed in a molar ratio of $0.1 \leq [a/(b+c+d)]$ where $a>0$, $b>0$, $c \geq 0$, $d \geq 0$,

- the organosilane mixture is mixed with water or a water/acid mixture and/or a water/acid/alcohol mixture, the amount of acid being chosen such that the reaction mixture has a pH in the range from 1 to 8,

- and the alcohol already present and/or formed during the reaction is removed.

8. A process according to claim 7,
characterized in that
the organosilanes employed are cocondensed with 0.5 to 30 moles of water per mole of organosilane.

9. A process according to claim 7 or 8,
characterized in that
a monobasic acid is employed.

10. A process according to at least one of claims 7 to 9,
characterized in that
the reaction is carried out in a temperature range from 0 to 100°C.

11. A process according to at least one of claims 7 to 10,
characterized in that
alcohol already present and/or formed during the reaction is removed by distillation, and at the same time water is added at the rate at which alcohol is removed from the reaction medium.

12. A process according to at least one of claims 7 to 11,
characterized in that
the removal of the alcohol by distillation is carried out under reduced pressure.

13. A process according to at least one of claims 7 to 12,
characterized in that
the removal of the alcohol by distillation is carried out until a temperature which corresponds to the boiling point of water has been reached at the top of the column.

14. A process according to at least one of claims 7 to 13,
characterized in that,
to reduce foam formation, a defoamer is added before and/or during the removal of the alcohol by distillation.

15. A process according to at least one of claims 7 to 14,
characterized in that
the residual content of alcohol in the organopolysiloxane-containing composition is adjusted to a value of < 3% by weight.

**16.** A process according to at least one of claims 7 to 15,
characterized in that
the resulting product is after-purified by sedimentation and/or filtration after the removal of the alcohol by distillation.

**17.** The use of an organopolysiloxane-containing composition based on water as claimed in claims 1 to 16 for simultaneous hydrophobicizing and oleophobicizing and for dirt- and colour-repellent treatment of surfaces, of metals, of plastics and of mineral building materials, for protecting buildings and facades, for coating glass fibres, for silanizing fillers and pigments, for improving the rheological properties of polymer dispersions and emulsions, for hydrophobicizing and oleophobicizing and for dirt- and colour-repellent treatment of textiles, leather and cellulose and starch products, and as a release agent, as a crosslinking agent, as an adhesion promoter and as an additive for paints and coatings.

**Revendications**

**1.** Composition contenant un organopolysiloxane, à base d'eau, qui est exempte d'agents tensioactifs, d'aminosilsesquioxanes fonctionnalisés par un methoxy ainsi que de microémulsions contenant des résines de silicone, et qui est pour l'essentiel exempte de solvant organique qui possède un point d'inflammation de plus de 70°C, et qui ne libère par dilution avec de l'eau essentiellement aucun alcool par hydrolyse, dans laquelle la composition renferme des organopolysiloxanes de formule générale I

$$HO[Si(A)(CH_3)_z(OH)_{1-z}O]_a[Si(B)(R^2)_y(OH)_{1-y}O]_b[Si(C)(CH_3)O]_c[Si(D)(OH)O]_dH \bullet (HX)_e \qquad (I),$$

dans laquelle

- A est un reste aminoalkyle dérivé de la formule générale (II)

$$H_2N(CH_2)_f(NH)_g(CH_2)_hSi(OR)_{3-z}(CH_3)_z \qquad (II),$$

  avec $0 \geq f \leq 6$, g=0 dans le cas où f=0 et g=1 dans le cas où f>0, $0 \leq h \leq 6$ et $0 \leq z \leq 1$,
- B est un reste fluororgano dérivé du tridécafluoro-1,1,2,2-tétrahydrooctyl-1-triméthoxysilane ou du tridécafluoro-1,1,2,2-tétrahydrooctyl-1-triéthoxysilane ou de la formule générale III

$$R^1-Y-(CH_2)_2Si(R^2)_y(OR)_{3-y} \qquad (III),$$

  dans laquelle $R^1$ est un groupe alkyle mono-oligo ou perfluoré ayant 1 à 9 atomes de carbone, ou un groupe aryle mono-, oligo-ou perfluoré, ou un groupe $R^fCH_2CH_2$ (CO) avec $R^f = C_nF_{2n+1}$ et n=2 à 18, Y signifie un groupe $CH_2$, O ou S, $R^2$ signifie un groupe alkyle linéaire, ramifié ou cyclique ayant de 1 à 8 atomes de carbone ou un groupe aryle, et $0 \leq y \leq 1$,
- C est un radical alkyle, dérivé de la formule générale IV

$$R^3-Si(CH_3)(OR)_2 \qquad (IV),$$

- D est également un radical alkyle cependant dérivé de la formule générale V

$$R^3-Si(OR)_3 \qquad (V),$$

  dans laquelle $R^3$ signifie dans les formules précédentes un groupe alkyle linéaire, ramifié ou cyclique ayant de 1 à 8 atomes de carbone, $R^3$ dans les formules précédentes à chaque fois est identique ou différent, R dans les formules précédentes signifie un groupe alkyle linéaire, ramifié ou cyclique ayant de 1 à 8 atomes de carbone, ou un groupe aryle, et R dans les formules précédentes à chaque fois est identique ou différent, et
- HX représente un acide dans lequel X est un reste d'acide minéral ou organique, avec $0 \leq y \leq 1$, $0 \leq z \leq 1$, a>0,

b>0, c≥0, d≥0, e≥0 et (a+b+c+d)≥2,

et la teneur en organopolysiloxanes comme principe actif dans la composition s'élève au moins à 0,005 % en poids et la teneur en alcool à moins de 3 % en poids.

2. Composition selon la revendication 1,
caractérisée en ce que
celle-ci possède une valeur de pH comprise entre 1 et 8.

3. Composition selon la revendication 1 ou 2,
caractérisée en ce que
celle-ci renferme un acide monovalent minéral et/ou organique et/ou leurs sous-produits.

4. Composition selon au moins une des revendications 1 à 3,
caractérisée en ce que
la teneur en alcool dans la composition contenant un organopolysiloxane, s'élève à moins de 1 % en poids.

5. Composition selon au moins une des revendications 1 à 4,
caractérisée en ce que
la teneur en organopolysiloxane en tant que principe actif dans la composition s'élève à de 0,005 % à 60 % en poids.

6. Compositions contenant un organopolysiloxane, selon au moins une des revendications 1 à 5,
accessibles par
mélanges d'organosilanes solubles dans l'eau de formule générale II

$$H_2N(CH_2)_f(NH)_g(CH2)_h-Si(CH_3)_z(OR)_{3-z} \qquad (II),$$

avec $0 \leq f \leq 6$, $g=0$ dans le cas où $f=0$ et $g=1$ dans le cas où $f>1$, $0 \leq h \leq 6$, $0 \leq z \leq 1$ et
R est un groupe alkyle linéaire, ramifié ou cyclique ayant de 1 à 8 atomes de carbone ou un groupe aryle,
avec le tridécafluoro 1,1,2,2-tétrahydrooctyl-1-triméthoxysilane, le tridécafluoro-1,1,2,2-tétrahydrooctyl-1-triéthoxysilane ou des organosilanes fluoroorgano fonctionnalisés de formule générale III

$$R^1-Y-(CH_2)_2Si(R^2)y(OR)_{3-y} \qquad (III)$$

dans laquelle $R^1$ est un groupe alkyle mono-oligo ou perfluoré ayant de 1 à 9 atomes de carbone ou un groupe aryle mono-, oligo-ou perfluoré ou un groupe $R^fCH_2CH_2(CO)$ avec $R^f = C_nF_{2n+1}$ et $n=2$ à 18, Y représente un groupe $CH_2$, O, ou S, $R^2$ représente un groupe alkyle linéaire, ramifié ou cyclique ayant de 1 à 8 atomes de carbone ou un groupe aryle et R représente un groupe alkyle linéaire, ramifié ou cyclique, ayant de 1 à 8 atomes de carbone ou un groupe aryle, avec $0 \leq y \leq 1$,
et le cas échéant des organosilanes de formule générale IV

$$R^3-Si(CH_3)(OR)_2 \qquad (IV),$$

et ou des organosilanes de formule générale V

$$R^3-Si(OR)_3 \qquad (V),$$

dans laquelle $R^3$ ici et dans la formule précédente signifie un groupe alkyle linéaire, ramifié ou cyclique ayant de 1 à 8 atomes de carbone, $R^3$ ici et dans la formule précédente respectivement est identique ou différent, R ici et dans la formule précédente signifie un groupe alkyle linéaire, ramifié ou cyclique ayant de 1 à 8 atomes de carbone, ou un groupe aryle et R est chaque fois identique ou différent dans le rapport molaire

$$M = [a/(b+c+d)] \geq 0,1 \text{ mit } a>0, b>0, c\geq0, d\geq0,$$

- dans lequel a est la somme des nombres molaires des organosilanes conformément à la formule II, b est la somme des nombres molaires des organosilanes conformément à la formule III du tridécafluoro 1,1,2,2-tétrahydrooctyl-1-triéthoxysilane ou du tridécafluoro-1,1,2,2 1-tétrahydrosotyl-1-triéthoxysilane, ainsi que le cas échéant, c est la somme des nombres molaires des organosilanes conformément à la formule IV ainsi que le cas échéant d est la somme des nombres molaires des organosilanes conformément à la formule V,
- dilution du mélange avec de l'eau ou avec un mélange eau/acide et/ou avec un mélange eau/acide/alcooln,
- ajustement de la valeur du pH du mélange réactionnel à une valeur comprise entre 1 et 8, et
- élimination de l'alcool déjà présent et/ou formé au cours de la réaction.

**7.** Procédé de préparation d'une composition contenant un organopolysiloxane selon au moins l'une des revendications 1 à 6,
caractérisé en ce qu'
on mélange

- a mol d'organosilanes de formule générale II,
- b mol d'organosilanes de formule générale III, du tridécafluoro-1,1,2,2-tétrahydrooctyl-1-triméthoxysilane, ou du tridécafluoro-1,1,2,2-tétrahydrooctyl-1-triéthoxysilane ainsi qu'éventuellement :
- c mol d'organosilanes de formule générale IV, et/ou le cas échéant,
- d mol d'organosilanes de formule générale V,

dans le rapport molaire

$$0,1 \leq [a(b+c+d)] \text{ avec } a>0, b>0, c\geq0 \text{ et } d\geq0$$

- on dilue le mélange d'organosilanes avec de l'eau ou un mélange eau/acide et/ou un mélange eau/acide/alcool, en choisissant la quantité d'acide de telle sorte que le mélange réactionnel possède une valeur de pH dans la plage de 1 à 8,
- et on chasse l'alcool déjà présent et/ou formé au cours de la réaction.

**8.** Procédé selon la revendication 7,
caractérisé en ce qu'
on condense l'organosilane mis en oeuvre avec 0,5 à 30 moles d'eau par mole d'organosilane.

**9.** Procédé selon la revendication 7 ou la revendication 8,
caractérisé en ce qu'
on met en oeuvre un acide mono-basique.

**10.** Procédé selon au moins l'une quelconque des revendications 7 à 9,
caractérisé en ce qu'
on effectue la réaction dans une plage de température comprise entre 0 et 100°C.

**11.** Procédé selon au moins l'une quelconque des revendications 7 à 10,
caractérisé en ce qu'
on chasse l'alcool déjà présent et/ou formé au cours de la réaction par distillation et pour cela on ajoute de l'eau en même temps au fur et a mesure que l'alcool est éliminé du milieu réactionnel.

**12.** Procédé selon au moins l'une quelconque des revendications 7 à 11,
caractérisé en ce qu'
on effectue la séparation par distillation de l'alcool sous pression réduite.

**13.** Procédé selon au moins l'une des revendications 7 à 12,
caractérisé en ce qu'
on effectue la séparation par distillation de l'alcool jusqu'à ce qu'on atteigne à la tête de la colonne une température qui corresponde à la température d'ébullition de l'eau.

**14.** Procédé selon au moins l'une des revendications 7 à 13,
caractérisé en ce qu'
on ajoute un agent antimousse en vue de la diminution de la formation de mousse avant et/ou pendant la séparation par distillation de l'alcool.

**15.** Procédé selon au moins l'une des revendications 7 à 14,
caractérisé en ce qu'
on ajuste la teneur résiduelle en alcool dans la composition contenant un organopolysiloxane à une valeur <3 % en poids.

**16.** Procédé selon au moine l'une des revendications 7 à 15,
caractérisé en ce qu'
on purifie ultérieurement le produit obtenu après la séparation par distillation de l'alcool, par sédimentation et/ou par filtration.

**17.** Utilisation des compositions contenant un organopolysiloxane à base d'eau, selon les revendications 1 à 16, pour l'hydrophobisation et l'oléophobisation simultanées ainsi que pour l'apprêtage qui repousse la salissure et les couleurs de surfaces, de métaux, de matières plastiques, d'éléments de construction minéraux, pour les protections des bâtiments et de façades, pour le revêtement de fibres de verre, pour la silanisation de substances de charge et de pigments, pour l'amélioration des propriétés rhéologiques des dispersions de polymères et d'émulsions, pour l'hydrophobisation et l'oléophobisation ainsi que pour l'apprêtage anti- salissure et antidécoloration des textiles, du cuir, des produits cellulosiques et amylacés, ainsi que comme agent de démoulage, comme agent réticulant, comme adjuvant d'adhésion ainsi que comme adjuvants pour les couleurs et les laques.